# EUROPÄISCHE PATENTSCHRIFT

(11) **EP 0 438 062 B1**
(45) Veröffentlichungstag und Bekanntmachung des Hinweises auf die Patenterteilung: **03.11.1993**
(21) Anmeldenummer: 91100143.6
(22) Anmeldetag: 04.01.1991
(51) Int. Cl.: A01G 1/00, A01G 13/02

(54) **Verfahren zur Befestigung von Landflächen**
Method for fixing soils
Méthode de fixation de terrains

(30) Priorität: 18.01.1990 DE 4001307
(43) Veröffentlichungstag der Anmeldung: 24.07.1991
(73) Patentinhaber: H. HENSELMANN GmbH & Co KG, 79761 Waldshut-Tiengen (DE)
(72) Erfinder: Eschle, Volker, W-7743 Furtwangen (DE); Schiller, Milena, W-7743 Furtwangen (DE); Frei, Volker, W-7820 Titisee-Neustadt (DE); Winkler, Roland, W-7853 Steinen (DE); Müller, Wolfgang, W-7730 VS-Schwenningen (DE)
(74) Vertreter: Schmitt, Hans, Dipl.-Ing.

(56) Entgegenhaltungen:
- GB-A- 319 783
- GB-A- 383 267
- US-A- 1 962 806
- US-A- 3 125 294

## Beschreibung

Die Erfindung betrifft ein Verfahren zur Befestigung von Landflächen, insbesondere von durch Erosion zerstörten oder gefährdeten Flächen oder Böden, wobei eine pumpfähige Masse aufgetragen wird, welche als Keimboden für Pflanzen dient.

Ein derartiges Verfahren ist aus der DE-A-20 51 314 bekannt. Dabei soll eine Mischung aus einer Bitumenemulsion, geeignetem Schaumstoff, Wasser, Samen und Düngemittel auf die zu begrünende Fläche aufgebracht werden. Als problematisch ist dabei vor allem das Bitumen als Erdölprodukt anzusehen, welches zum Wachstum der Pflanzen nichts beiträgt und außerdem nicht verrottet, sondern für einen Abbau ca. 10 Jahre benötigt. Darüberhinaus erscheint dieses Verfahren für steilere Hanglagen, die häufig einer Erosion besonders stark ausgesetzt sein können, weniger geeignet, da ein Abrutschen befürchtet werden muß.

Aus der DE-A-29 22 121 ist ein Verfahren zur Begrünung von Halden, insbesondere von Bergehalden bekannt, bei welchem Mutterboden mit Grassamen und Wasser zu einem Brei gemischt wird, der von einzelnen Fahrebenen der Halden über die Haldenschrägen abgeströmt werden soll. Zwar ist dieses Verfahren für geneigte Hänge gedacht, jedoch besteht dabei die Gefahr, daß bei starken Niederschlägen der Brei, selbst wenn er schon teilweise oder ganz getrocknet sein sollte, abgeschwemmt wird.

Es sind deshalb auch Verfahren anderer Gattung bekanntgeworden, bei denen Matten aus unterschiedlichen Stoffen hergestellt werden, die den Keimboden bilden sollen. Dies bedeutet jedoch nicht nur eine aufwendige Herstellung, sondern auch das Aufbringen dieser Matten bedingt einen entsprechenden Transport und eine gute Verankerung vor allem dann, wenn geneigte Landflächen befestigt oder begrünt werden sollen.

Aus der US-A-1 962 806 ist ein Verfahren zur Befestigung von Landflächen gemäß dem ersten Teil des Anspruchs 1 bekannt.

Es besteht deshalb die Aufgabe, ein Verfahren der eingangs erwähnten Art zu schaffen, welches die Vorteile einer auftragbaren pumpfähigen Masse mit einer Verwendung möglichst natürlicher und für die Umwelt unschädlicher Stoffe verbindet, die in großer Menge und preiswert zur Verfügung stehen sollen, wobei die auftragbare Masse ohne besondere Zusatzmaßnahmen auch an geneigten oder steil geneigten Bodenflächen gut haften und dennoch einen guten Keimboden für Pflanzen bilden soll.

Die überraschende Lösung dieser scheinbar widersprüchlichen Aufgabe besteht darin, daß Holz mechanisch-thermisch zerfasert wird, wobei zumindest ein Teil der Holzfasern mit einer Länge von wenigstens etwa einem halben bis einem Zentimeter gebildet werden, und daß die Holzfasern miteinander verfilzt und zur Bildung der pumpfähigen Masse mit Wasser gemischt werden.

Holzfasern ergeben bei einem Mischvorgang nicht nur eine gegenseitige gute Verfilzung und somit eine gegenseitige Verbindung und Vernetzung, sondern haften auch gut an einem Untergrund Selbst in stark geneigter Lage, wo sich einzelne Faserenden widerhakenartig an Unebenheiten festhalten können, so daß diese Masse oder Pulpe nicht abrutschen und auch nicht nachrutschen kann. Gleichzeitig ergibt sich eine hohe Kapazität zur Speicherung von Wasser und Nährstoffen, so daß ein sofortiges Abfließen des Wassers und eines eventuellen Düngemittels durch das Erdreich und in das Grundwasser verhindert wird und stattdessen diese Stoffe den Keimlingen so lange wir möglich zur Verfügung stehen. Dabei wird in vorteilhafter Weise die gegenseitige Bindung der Holzfasern durch das im Holz vorhandene natürliche Harz verstärkt und verbessert, welches bei dem Zerfaserungsprozeß teilweise freigesetzt wird. Gleichzeitig bleiben genügend Hohlräume zwischen den Holzfasern, um Wasser, Samenkörner, Düngemittel, Mineralien, Nährstoffe und dergleichen aufzunehmen und zu halten.

Besonders zweckmäßig ist es, wenn Weichholz, insbesondere Fichtenholz, zerfasert und zu einer pumpfähigen Masse oder Pulpe mit Wasser gemischt wird. Einerseits ist solches Weichholz in großen Mengen verfügbar und enthält andererseits viel natürliches Harz, um den Zusammenhalt der Masse zu verbessern.

Die Masse oder Pulpe kann beim Auftragen auf einen Boden ca. 90 Gewichtsprozent Wasser enthalten. Somit ist selbst bei einer längeren Trockenzeit eine genügend gute Versorgung von Keimlingen mit Wasser gegeben.

Bei der Mischung der pumpfähigen Masse können auch Samen oder Samengemische, insbesondere Samen derjenigen Pflanzen zugemischt werden, die in der zu begrünenden Region heimisch sind. Es ist dann ein besonders Schnelles und problemloses Keimen und Wachsen dieser Pflanzen zu erwarten.

Der Masse oder Pulpe können natürliche Bindemittel und/oder Bodenverbesserer, z.B. mineralisches Granulat und/oder Düngemittel, vorzugsweise mineralische Dünger, zugemischt werden. Beim Auftragen enthält dann diese Masse schon alle erforderlichen Bestandteile, um das Keinen und Wachsen von Pflanzen zu begünstigen und damit die Befestigung von Böden schnellstmöglich zu erreichen, zumal erwartet werden kann, daß die Wurzeln der Keimlinge durch den faserartigen Überzug des Bodens, der durch das Auftragen der Masse entstanden ist, nach unten hindurch und in den Untergrund eindringen.

Die Pulpe kann dabei in einer Schichtdicke ab etwa einem halben Zentimeter, vorzugsweise in einer Dicke von etwa einem Zentimeter bis fünf Zentimeter auf den Boden oder die Landfläche aufgebracht werden. Ferner kann die Pulpe auch in mehreren Schichten übereinander aufgetragen werden. Dabei kann die Masse maschinell und/oder manuell aufgetragen werden. Nach geraumer Zeit, während der Anbindung der Pflanzen an das Erdreich des zu befestigenden Bodens, erfolgt ein natürlicher, ökologisch unbedenklicher Zerfall der den faserartigen Überzug dieses Bodens bildenden Holzfasern, wobei diese in vorteilhafter Weise zu humosen Bestandteilen zersetzt werden. Dies trägt zur weiteren Bodenverbesserung bei.

Ein weiterer Vorteil des erfindungsgemäßen Verfahrens besteht darin, daß die damit hergestellten Überzüge sogar zur Begrünung von Betonflächen und Böschungen verwendet werden können.

Wenn mindestens die Hälfte der an der Masse beteiligten Holzfasern wenigstens etwa einen halben bis einen Zentimeter lang sind, können schräge Flächen mit einer Geländesteigung bis siebzig Prozent oder gar siebzig Grad damit beschichtet und begrünt werden.

In vorteilhafter Weise werden also die Holzfasern einerseits sowohl zur mechanischen Verfestigung der Schicht selbst als auch ihrer Verbindung mit dem Untergrund benutzt, andererseits ergeben sie viele Hohlräume zur Speicherung von Samen und nützlichen Stoffen für das Auskeimen und schließlich tragen sie selbst durch ihren allmählichen Verfall noch zur Bodenverbesserung bei. Es können also mit Hilfe dieser Holzfasern drei völlig verschiedene und scheinbar voneinander unabhängige Vorteile erzielt werden.

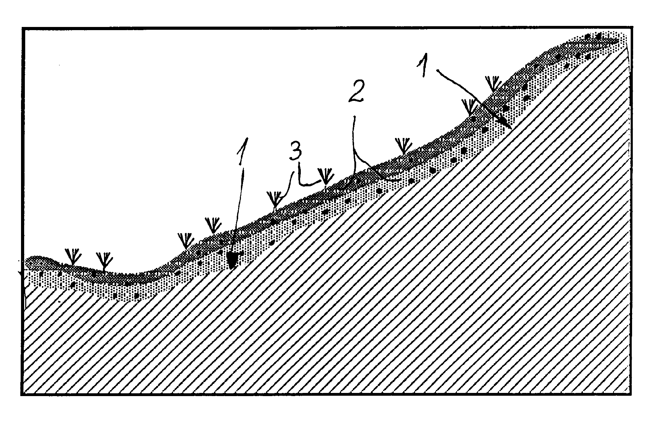

Nachstehend ist die Erfindung anhand der Zeichnung noch näher beschrieben.

Die einzige Figur zeigt in schematisierter Darstellung einen Schnitt durch ein Gelände, dessen Fläche oder Boden mit Hilfe des erfindungsgemäßen Verfahrens saniert ist.

Auf einer Landfläche 1, deren Oberfläche oder Boden eventuell durch Erosion zerstört oder mindestens gefährdet ist, ist eine pumpfähige Masse 2 aufgetragen worden, welche als Keimboden für Pflanzen 3 dient. Diese Masse 2 ist dadurch entstanden, daß Holz mechanisch-thermisch zerfasert wird, wobei zumindest ein Teil der Holzfasern mit einer Länge von wenigstens etwa einem halben bis ein Zentimeter gebildet werden, und daß die Holzfasern miteinander verfilzt und durch das natürliche Harz des Holzes verbunden und außerdem zur Bildung der pumpfähigen Masse 2 mit Wasser gemischt werden. Diese pumpfähige Masse oder Pulpe, die bevorzugt aus Weichholz wie z.B. Fichtenholz, entstanden sein kann, wird maschinell oder manuell auf die Landfläche 1 aufgetragen, z.B. aufgespritzt. Dabei können z.B. ca. 90 Gewichtsprozente dieser Masse 2 Wasser sein.

Nach einer gewissen Zeit wird ein Teil dieses Wassers zwar verdunsten, jedoch kann eine verfilzte Masse aus Holzfasern, die zusätzlich durch das natürliche Harz des Holzes aneinander haften, sehr viel Wasser über lange Zeit halten. Man erkennt in der Zeichnung, daß die aufgetragene Schicht ihrerseits zweischichtig ist, wobei die obere dunklere Schicht durch Verdunstung etwas Wasser verloren hat, die untere tiefere Schicht, die für die Versorgung der Wurzeln der Pflanzen 3 besonders wichtig ist, aber noch praktisch den gesamten Wasseranteil hält.

Bei der Mischung der pumpfähigen Masse, also bei der intensiven Vermischung der Holzfasern mit Wasser, können auch Samen oder Samengemische zugemischt werden, wobei bevorzugt Samen derjenigen Pflanzen gewählt werden können, die in der zu begrünenden Region heimisch sind. Gleichzeitig können natürliche Bindemittel, Bodenverbesserer, z.B. mineralischer Granulate, Düngemittel, vorzugsweise mineralische Dünger und dergleichen zugemischt werden. Die Holzfasern haben aber den zusäztlichen Vorteil, daß sie nicht nur eine sehr gut speichernde Masse bilden, die sich aufgrund der Faserenden gut an Bodenunebenheiten festhält und vernetzt, sondern daß das Holz im Laufe der Zeit in humose Bestandteile zersetzt wird und dann seinerseits zur Bodenverbesserung beiträgt, wobei die Zersetzungszeit genügend lang ist, um den Pflanzen 3 Zeit dazu zu geben, daß ihre Wurzeln durch die Masse 2 bis in die Landfläche 1 eindringen können.

Aus der Zeichnung wird anschaulich, daß dieses Verfahren zum Begrünen von Böden nicht nur für flaches, sondern auch für relativ steiles Gelände geeignet ist, wobei die Neigung des dargestellten Hanges bereichsweise 45 Grad, also 100 Prozent beträgt.

Das Verfahren zum Befestigen von Landflächen 1, deren Boden durch Erosion gefährdet oder zerstört ist, besteht vor allem darin, eine pumpfähige Masse 2 aufzutragen, welche als Keimboden oder Keimschicht für Pflanzen 3 geeignet ist. Dazu wird vorgeschlagen, Holz mechanisch-thermisch zu zerfasern, wobei Holzfasern mit einer solchen Länge gebildet werden, daß sie miteinander verfilzt werden können, um auch aufgrund des natürlichen Harzes aus dem Holz gut miteinander vernetzt zu sein, sich aber auch an der Bodenfläche mit entsprechenden Holzfaserenden verankern läßt. Die Holzfasern werden zur Bildung der pumpfähigen Masse 2 mit Wasser gemischt, so daß diese pumpfähige Masse manuell oder maschinell aufgetragen werden kann.

## Patentansprüche

1. Verfahren zur Befestigung von Landflächen (1), insbesondere von durch Erosion zerstörten oder gefährdeten Flächen oder Böden, wobei eine pumpfähige Masse (2) aus Holzfasern und Wasser aufgetragen wird, wobei diese pumpfähige Masse durch Mischen der Holzfasern mit Wasser hergestellt wird und als Keimboden oder Keimschicht für Pflanzen dient, **dadurch gekennzeichnet,** daß das Holz mechanisch-thermisch zerfasert wird, wodurch zumindest ein Teil der Holzfasern mit einer Länge von wenigstens etwa einem halben bis ein Zentimeter gebildet werden, daß die Holzfasern miteinander verfilzt werden und daß der pumpfähigen, mit Wasser gemischten Masse (2) Bodenverbesserer und/oder Düngemittel zugemischt werden.

2. Verfahren nach Anspruch 1, dadurch gekennzeichnet, daß Weichholz, insbesondere Fichtenholz, mechanisch-thermisch zerfasert und mit Wasser und einem Bodenverbesserer und/oder Düngemittel zu der pumpfähigen Masse (2) oder Pulpe gemischt wird.

3. Verfahren nach Anspruch 1 oder 2, dadurch gekennzeichnet, daß die Masse (2) oder Pulpe beim Auftragen auf einen Boden ca. 90 Gewichtsprozente Wasser enthält.

4. Verfahren nach einem der Ansprüche 1 bis 3, dadurch gekennzeichnet, daß der pumpfähigen Masse (2) auch Samen oder Samengemische, insbesondere Samen derjenigen Pflanzen zugemischt werden, die in der zu begrünenden Region heimisch sind.

5. Verfahren nach einem der Ansprüche 1 bis 4, dadurch gekennzeichnet, daß der Masse (2) oder Pulpe natürliche Bindemittel und/oder mineralisches Granulat als Düngemittel und/oder mineralische Dünger, gegebenenfalls flüssige Düngemittel zugemischt werden.

6. Verfahren nach einem der Ansprüche 1 bis 5, dadurch gekennzeichnet, daß die Pulpe oder Masse (2) in einer Schichtdicke ab etwa 0,5 cm, vorzugsweise in einer Dicke von 1 cm bis 5 cm auf den Boden oder die Landfläche aufgetragen wird.

7. Verfahren nach einem der Ansprüche 1 bis 6, dadurch gekennzeichnet, daß mehrere Schichten der Masse (2) nacheinander übereinander aufgetragen werden.

8. Verfahren nach einem der Ansprüche 1 bis 7, dadurch gekennzeichnet, daß die Masse (2) maschinell und/oder manuell auf die Landfläche (1) aufgetragen wird.

## Claims

1. A method for stabilizing terrain (1), particularly surfaces or soil destroyed or endangered by erosion, wherein a pumpable composition (2) of wood fibres and water is deposited, said pumpable composition being produced by mixing the wood fibres with water and serving as a substrate for plants, characterized in that the wood is pulped thermomechanically through which at least some of the wood fibres are produced with a length of at least about half to one centimetre, that the wood fibres are interfelted and that soil improvers and/or fertilizers are admixed to the pumpable composition (2) mixed with water.

2. A method as claimed in claim 1, characterized in that soft wood, particularly spruce-wood, is thermomechanically pulped and mixed with water and a soil improver and/or fertilizer to produce the pumpable composition (2) or pulp.

3. A method as claimed in claim 1 or claim 2, characterized in that when deposited on land the composition (2) or pulp contains approximately 90 percent by weight water.

4. A method as claimed in any one of claims 1 to 3, characterized in that seeds or seed mixtures are also admixed to the pumpable composition (2), particularly seeds of those plants native to the region to be sowed down.

5. A method as claimed in any one of claims 1 to 4, characterized in that natural binding agents and/or mineral granular material as a fertilizer and/or mineral fertilizer, possibly liquid fertilizers, are admixed to the composition (2) or pulp.

6. A method as claimed in any one of claims 1 to 5, characterized in that the pulp or composition (2) is deposited on the ground or terrain in a layer thickness from about 0.5 cm onwards, preferably in a thickness of 1 cm to 5 cm.

7. A method as claimed in any one of claims 1 to 6, characterized in that a plurality of layers of the composition (2) are successively deposited one on top of the other.

8. A method as claimed in any one of claims 1 to 7, characterized in that the composition (2) is deposited on the terrain (1) by machine and/or by hand.

## Revendications

1. Méthode pour stabiliser des terrains (1), notamment des surfaces ou des sols détruits ou menacés par l'érosion, selon laquelle on applique une boue liquide (2) composée de fibres de bois et d'eau, cette boue liquide étant fabriquée en mélangeant les fibres de bois avec de l'eau et servant de sol ou de couche de germination pour plantes, caractérisée en ce que le bois est défibré de manière mécano-thermique, ce qui fait qu'au moins une partie des fibres a une longueur approximative d'au moins un demi à un centimètre, en ce que les fibres de bois sont entremêlées et en ce que des substances améliorantes pour les sols et/ou des engrais sont mélangés à la boue liquide (2) mélangée avec de l'eau.

2. Méthode selon la revendication 1, caractérisée en ce que du bois tendre, notamment du bois d'épicéa, est défibré de manière mécano-thermique et mélangé avec de l'eau et des substances améliorantes pour les sols et/ou des substances fertilisantes à la boue liquide (2) ou pulpe.

3. Méthode selon la revendication 1 ou 2, caractérisée en ce que, lors de son application sur un sol, la boue (2) ou pulpe contient environ 90 % en poids d'eau.

4. Méthode selon l'une des revendications 1 à 3, caractérisée en ce que des semences ou un mélange de semences, notamment des semences de plantes dont l'habitat est la région à verdir, sont également mélangées à la boue liquide (2).

5. Méthode selon l'une des revendications 1 à 4, caractérisée en ce que des liants naturels et/ou des granulés minéraux servant de substance fertilisante et/ou des engrais minéraux, le cas échéant des substances fertilisantes liquides, sont mélangés à la pulpe ou boue (2).

6. Méthode selon l'une des revendications 1 à 5, caractérisée en ce que la pulpe ou boue (2) est appliquée sur le sol ou le terrain en une couche d'une épaisseur d'environ 0,5 cm au moins, de préférence en une couche d'une épaisseur de 1 à 5 cm.

7. Méthode selon l'une des revendications 1 à 6, caractérisée en ce que plusieurs couches de boue (2) sont appliquées successivement les unes sur les autres.

8. Méthode selon l'une des revendications 1 à 7, caractérisée en ce que la boue (2) est appliquée mécaniquement et/ou manuellement sur le terrain (1).
